# EUROPÄISCHE PATENTSCHRIFT

(11) **EP 3 223 973 B1**
(45) Veröffentlichungstag und Bekanntmachung des Hinweises auf die Patenterteilung: **25.07.2018**
(21) Anmeldenummer: 15790492.1
(22) Anmeldetag: 27.10.2015
(51) Int. Cl.: B21B 39/32

(54) **SYSTEM ZUM WENDEN VON PLATTENFÖRMIGEN KÖRPERN**
SYSTEM FOR OVERTURNING PLATE-SHAPED BODIES
SYSTÈME DE RETOURNEMENT D'ÉLÉMENTS EN FORME DE PLAQUE

(30) Priorität: 28.11.2014 DE 102014224364
(43) Veröffentlichungstag der Anmeldung: 04.10.2017
(73) Patentinhaber: SMS group GmbH, 40237 Düsseldorf (DE)
(72) Erfinder: PASS, Gisbert, 40237 Düsseldorf (DE); WERNER, Frank, 40237 Düsseldorf (DE); RIEDIGER, Michael, 40237 Düsseldorf (DE)
(74) Vertreter: Kross, Ulrich
(86) Internationale Anmeldenummer: PCT/EP2015/074790
(87) Internationale Veröffentlichungsnummer: WO 2016/083046

(56) Entgegenhaltungen:
- DE-A1- 3 123 673
- US-A- 3 581 910

## Beschreibung

Die Erfindung betrifft ein System zum Wenden von plattenförmigen Körpern, insbesondere Brammen und Blechen, aufweisend wenigstens einen um eine Schwenkachse verschwenkbar angeordneten Wenderarm, der mit einer Flachseite eines zu wendenden, plattenförmigen Körpers in körperlichen Kontakt bringbar ist, und wenigstens einen um eine weitere Schwenkachse verschwenkbar angeordneten weiteren Wenderarm, der mit einer weiteren Flachseite des zu wendenden, plattenförmigen Körpers in körperlichen Kontakt bringbar ist, wobei die beiden Schwenkachsen parallel zueinander und beabstandet voneinander angeordnet sind.

Des Weiteren betrifft die Erfindung ein Verfahren zum Wenden von plattenförmigen Körpern, insbesondere Brammen und Blechen, unter Verwendung eines Wendesystems, das wenigstens einen um eine Schwenkachse verschwenkbar angeordneten Wenderarm, der mit einer Flachseite eines zu wendenden, plattenförmigen Körpers in körperlichen Kontakt bringbar ist, und wenigstens einen um eine weitere Schwenkachse verschwenkbaren weiteren Wenderarm, der mit einer weiteren Flachseite des zu wendenden, plattenförmigen Körpers in körperlichen Kontakt bringbar ist, aufweist, wobei die beiden Schwenkachsen parallel zueinander und beabstandet voneinander angeordnet sind.

Brammen und Bleche werden zur Qualitätskontrolle und für eine eventuelle Nachbearbeitung auf beiden Flachseiten inspiziert. Hierzu wird eine Bramme bzw. ein Blech üblicherweise auf ein Inspektionsbett gelegt, so dass eine der beiden Flachseiten inspiziert werden kann. Um die andere Flachseite der Bramme bzw. des Blechs inspizieren zu können, muss die Bramme bzw. das Blech gewendet werden.

Zum Wenden von Blechen werden üblicherweise Blechwender eingesetzt. Diese weisen üblicherweise ortsfest gehaltene Wenderwellen auf, an denen Wenderarme verschwenkbar gelagert sind. Hierdurch haben die Wenderarme einen konstruktiv nicht veränderlichen Abstand zueinander. Dies führt insbesondere bei dünnen Brammen und Blechen dazu, dass die zu wendende Bramme bzw. das jeweilig zu wendende Blech durch sein Eigengewicht während der Übergabe von einer Eintragsseite zu einer Austragsseite eines Blechwenders umschlägt.

Ein solcher Blechwender ist beispielsweise aus EP 2 170 536 B1 bekannt. Dieser Blechwender umfasst auf einer Wenderwelle befindliche übergebende Wenderarme und auf einer weiteren Wenderwelle befindliche übernehmende Wenderarme. Die an der jeweiligen Wenderwelle gelagerten Wenderarme sind um eine gemeinsame Schwenkachse verschwenkbar angeordnet, die identisch mit einer Längsmittelachse der jeweiligen Wenderwelle ist. Die Wenderwellen und somit die dadurch definierten Schwenkachsen sind parallel zueinander und beabstandet voneinander angeordnet. Um Betriebsgeräusche und Schwingungen in einem Blech während einer Übergabe des Blechs von den übergebenden Wenderarmen zu den übernehmenden Wenderarmen zu reduzieren, ist die Wenderwelle der übernehmenden Wenderarme in Bezug auf die Wenderwelle der übergebenden Wenderarme versetzt angeordnet. Zudem ist an den übernehmenden Wenderarmen wenigstens eine Dämpfungsplatte angeordnet, über die ein Umschlagen des Blechs auf die übernehmenden Wenderarme während eines Wendevorgangs mechanisch gedämpft wird.

DE 10 2007 054 034 A1 behandelt eine Vorrichtung zum Wenden von plattenförmigen Körpern unterschiedlicher Dicke mit an Wenderwellen verschwenkbar gelagerten Wenderarmen. Die Wenderarme sind jeweils um eine Schwenkachse verschwenkbar angeordnet, die identisch mit einer Längsmittelachse der jeweiligen Wenderwelle ist. Die Wenderwellen und somit die dadurch definierten Schwenkachsen sind parallel zueinander und beabstandet voneinander angeordnet. Um plattenförmige Körper unterschiedlicher Dicke wenden zu können, wird einer der Wenderarme dem an dem anderen Wenderarm angeordneten plattenförmigen Körper mit einer, gegebenenfalls wiederkehrenden, Schrittfolge von Verminderung und Vergrößerung seines Abstands zu dem plattenförmigen Körper zugeführt.

DE 31 23 673 A1 offenbart einen reversierbaren Blechwender mit an Schwenkachsen verschwenkbar gelagerten Wenderarmen, wobei der Abstand der beiden Schwenkachsen zueinander in horizontaler Richtung veränderbar ist. Der Oberbegriff der Ansprüche 1 und 8 basiert auf der US 3,581,910. Aufgabe der Erfindung ist es, ein dauerhafteres System zum Wenden von plattenförmigen Körpern, insbesondere Brammen und Blechen, mit unterschiedlichen Abmessungen bereitzustellen, mit dem eine mit dem Wenden einhergehende Lärmentwicklung weitestgehend reduziert wird und durch das Wenden bedingte Beschädigungen an den plattenförmigen Körpern weitestgehend vermieden werden.

Diese Aufgabe wird durch die unabhängigen Ansprüche gelöst. Vorteilhafte Ausgestaltungen sind insbesondere in den abhängigen Ansprüchen angegeben, welche jeweils für sich genommen oder in verschiedener Kombination miteinander einen Aspekt der Erfindung darstellen können.

Das erfindungsgemäße System zum Wenden von plattenförmigen Körpern, insbesondere Brammen und Blechen, umfasst wenigstens einen um eine Schwenkachse verschwenkbar angeordneten Wenderarm, der mit einer Flachseite eines zu wendenden, plattenförmigen Körpers in körperlichen Kontakt bringbar ist, wenigstens einen um eine weitere Schwenkachse verschwenkbar angeordneten weiteren Wenderarm, der mit einer weiteren Flachseite des zu wendenden, plattenförmigen Körpers in körperlichen Kontakt bringbar ist, wobei die beiden Schwenkachsen parallel zueinander und beabstandet voneinander angeordnet sind, und wenigstens eine antreibbare Exzenteranordnung, mit der eine Lage einer der Schwenkachsen vor und/oder während eines Wendevorgangs verstellbar ist.

Erfindungsgemäß kann die Lage wenigstens einer Schwenkachse, insbesondere kontinuierlich, verstellt werden, während die beiden Schwenkachsen ununterbrochen parallel zueinander angeordnete sind. Durch die erfindungsgemäße Verwendung von wenigstens einer Exzenteranordnung zur Verstellung der Lage der Schwenkachse kann die Lage der Schwenkachse auf einer in einer senkrecht zu der Schwenkachse angeordneten Ebene liegenden Kreisbahn verstellt werden. Hierdurch kann der an der Schwenkachse angreifende Lagerabschnitt des um die Schwenkachse schwenkbar angeordneten Wenderarms angehoben, abgesenkt, auf die andere Schwenkachse zu oder von der anderen Schwenkachse weg bewegt werden. Auch sind beliebig viele Zwischenstellungen der Schwenkachse zwischen vertikalen und horizontalen Extremstellungen auf der Kreisbahn möglich. Bei einer Lagerverstellung der Schwenkachse bleibt die Position der Wenderwelle selbst unverändert.

Durch eine Bewegung der Schwenkachse auf die andere Schwenkachse zu oder von der anderen Schwenkachse weg kann der Abstand zwischen dem um die Schwenkachse schwenkbar angeordneten Wenderarm und einem an der anderen Schwenkachse verschwenkbar angeordneten Wenderarm, insbesondere kontinuierlich, variiert werden. Hierdurch kann das System sehr genau an die jeweilige Dicke des zu wendenden, plattenförmigen Körpers angepasst werden. Dadurch kann ein Umschlagen des plattenförmigen Körpers bei einer Übergabe des plattenförmigen Körpers von einem an der einen Schwenkachse verschwenkbar angeordneten Wenderarm an einen an der anderen Schwenkachse verschwenkbar angeordneten Wenderarm weitestgehend vermieden werden. Dies geht mit einer weitestgehenden Reduzierung der mit dem Wenden einhergehenden Lärmentwicklung einher.

Durch die weitestgehende Vermeidung des Umschlagens eines plattenförmigen Körpers bei seiner Übergabe von einem an der einen Schwenkachse verschwenkbar angeordneten Wenderarm an einen an der anderen Schwenkachse verschwenkbar angeordneten Wenderarm mittels des erfindungsgemäßen Systems werden Stöße und Schläge in Lagern des Systems weitestgehend reduziert. Hierdurch wird die Lebensdauer von Verschleißbauteilen, insbesondere den Lagern, erhöht, wodurch das System höhere Standzeiten als herkömmliche Wender aufweist. Dies geht zudem mit einer Verringerung von Wartungskosten und Reparaturkosten einher.

Durch die weitestgehende Vermeidung des Umschlagens eines plattenförmigen Körpers bei seiner Übergabe von einem an der einen Schwenkachse verschwenkbar angeordneten Wenderarm an einen an der anderen Schwenkachse verschwenkbar angeordneten Wenderarm mittels des erfindungsgemäßen Systems können zudem durch das Umschlagen bedingte Schwingungen in dem plattenförmigen Körper und eine damit einhergehenden Lärmentwicklung weitestgehend reduziert werden. Des Weiteren können durch das Umschlagen bedingte Beschädigungen an einer Flachseite des plattenförmigen Körpers weitestgehend vermieden werden.

Die Lage der Schwenkachse kann vor und/oder während eines Wendevorgangs derart verstellt werden, dass der Abstand zwischen den parallel zueinander angeordneten Schwenkachsen zumindest zum Zeitpunkt der Übergabe eines plattenförmigen Körpers von einem an der einen Schwenkachse verschwenkbar angeordneten Wenderarm an einen an der anderen Schwenkachse verschwenkbar angeordneten Wenderarm optimal an die jeweilige Dicke des plattenförmigen Körpers angepasst ist. Diese Anpassung des Abstands zwischen den Schwenkachsen kann aber auch schon in einem früheren Zeitpunkt, beispielsweise vor oder beim Start, des Wendevorgangs vorgenommen werden. Zur Anpassung des Abstands zwischen den Schwenkachsen an verschiedene Dicken von zu wendenden, plattenförmigen Körpern kann ein Algorithmus verwendet bzw. auf einer Rechnereinheit ausgeführt werden, um eine weiche und stoßfreie Übergabe eines plattenförmigen Körpers zu realisieren. Eine solche Anpassung des Abstands zwischen den Schwenkachsen an verschiedene Dicken von zu wendenden, plattenförmigen Körpern kann auch während eines Wendevorgangs erfolgen.

Das erfindungsgemäße System kann als separates ("stand-alone") System ausgebildet oder in eine, insbesondere automatisch arbeitende, Inspektionslinie zur Inspektion von plattenförmigen Körpern integriert sein.

Der um die eine Schwenkachse verschwenkbar angeordnete Wenderarm kann unabhängig von oder synchronisiert zu dem an der anderen Schwenkachse verschwenkbar angeordneten Wenderarm verschwenkbar sein. Eine Synchronisation der Bewegungen von an den Schwenkachsen, insbesondere gegenläufig, verschwenkbar angeordneten Wenderarmen kann über eine entsprechende Ausgestaltung einer zu diesem synchronen Verschwenken vorgesehene elektrische, hydraulische oder pneumatische Antriebseinrichtung vorgenommen werden.

Das erfindungsgemäße System kann auch zwei oder mehrere Wenderarme aufweisen, die um eine der Schwenkachsen verschwenkbar angeordnet sind. Diese Wenderarme können unabhängig voneinander bewegbar oder über wenigstens ein Verbindungselement unbeweglich aneinander gekoppelt sein.

Zum Verstellen der Lage einer der Schwenkachsen vor und/oder während eines Wendevorgangs kann das erfindungsgemäße System auch zwei oder mehrere, unabhängig oder synchronisiert, antreibbare Exzenteranordnungen aufweisen. Es können auch die Lagen beider Schwenkachsen über jeweils wenigstens eine antreibbare Exzenteranordnung entsprechend, insbesondere kontinuierlich, verstellt werden, was mit einer noch weitergehenderen Reduzierung der mit dem Wenden von plattenförmigen Körpern einhergehenden Lärmentwicklung und einer noch dauerhafteren Ausgestaltung des erfindungsgemäßen Systems einhergeht. Die wenigstens eine antreibbare Exzenteranordnung kann mittels einer elektrischen, hydraulischen oder pneumatischen Antriebseinrichtung angetrieben werden.

Gemäß einer vorteilhaften Ausgestaltung umfasst die antreibbare Exzenteranordnung eine ortsfest angeordnete Wenderwelle und wenigstens eine über wenigstens ein Radiallager auf der Wenderwelle angeordnete, antreibbare Exzenterbuchse, wobei einer der Wenderarme über wenigstens ein Radiallager mit der antreibbaren Exzenterbuchse verbunden ist. Die antreibbare Exzenteranordnung kann für jeden mit der Wenderwelle verbundenen Wenderarm eine antreibbare Exzenterbuchse aufweisen, wobei die Exzenterbuchsen synchronisiert oder unabhängig voneinander antreibbar sind. Letzteres macht ein gleichzeitiges Wenden von plattenförmigen Körpern mit unterschiedlichen Abmessungen (Länge, Dicke, Breite) mittels des Systems möglich. Beim Antreiben der Exzenterbuchse wird diese um die ortsfest angeordnete Wenderwelle gedreht. "Ortsfest angeordnet" bedeutet hierbei, dass die Wenderwelle ihre räumliche Lage nicht ändert, jedoch um ihre Längsmittelachse drehbar angeordnet sein kann. Wenigstens eines der Radiallager kann als Radialgleitlager oder als Radialwälzlager ausgebildet sein.

Nach einer alternativen vorteilhaften Ausgestaltung umfasst die antreibbare Exzenteranordnung eine ortsfest und um ihre Längsmittelachse drehbar angeordnete, antreibbare Wenderwelle und wenigstens einen auf der Wenderwelle angeordneten, drehfest mit der Wenderwelle verbundenen Exzenterkörper, wobei einer der Wenderarme über wenigstens ein Radiallager mit dem Exzenterkörper verbunden ist. Die antreibbare Exzenteranordnung kann für jeden mit der Wenderwelle verbundenen Wenderarm einen Exzenterkörper aufweisen, die durch ein Antreiben der Wenderwelle synchronisiert bewegbar sind. Das Radiallager kann als Radialgleitlager oder als Radialwälzlager ausgebildet sein. Alternativ zu dieser Ausgestaltung des Systems kann die antreibbare Wenderwelle nach Art einer Kurbelwelle mit wenigstens einem Hubzapfen ausgebildet sein, an dem wenigstens ein Wenderarm über wenigstens ein Radiallager beweglich angeordnet ist.

Eine weitere vorteilhafte Ausgestaltung sieht vor, dass das System wenigstens eine Messeinheit zum Messen der jeweiligen Dicke des zu wendenden, plattenförmigen Körpers und wenigstens eine kommunikationstechnisch mit der Messeinheit verbindbare Systemelektronik aufweist, wobei die Systemelektronik ein-gerichtet ist, die antreibbare Exzenteranordnung in Abhängigkeit der jeweilig gemessenen Dicke des zu wendenden, plattenförmigen Körpers anzutreiben. Hierdurch kann nach Erfassung der jeweiligen Dicke des zu wendenden, plattenförmigen Körpers ein vollautomatisierter Wendevorgang mit dem System durchgeführt werden, bei dem ein bezüglich der jeweilig gemessenen Dicke des plattenförmigen Körpers optimaler Abstand zwischen den Schwenkachsen eingestellt wird. Die Systemelektronik kann separat ausgebildet oder in eine Elektronik einer Inspektionslinie integriert sein. Eine entsprechende Messeinheit ist insbesondere sinnvoll, wenn das System als separates stand-alone-System ausgebildet ist. Ist das System in eine Inspektionslinie integriert, kann auf die Messeinheit verzichtet werden, da die jeweilige Dicke des zu wendenden, plattenförmigen Körpers über ein Materialverfolgungssystem einer übergeordneten Steuerung an das System übergeben werden kann. Dennoch kann ein in eine Inspektionslinie integriertes System eine entsprechende Messeinheit aufweisen.

Es ist des Weiteren von Vorteil, wenn das System wenigstens zwei um eine der Schwenkachsen verschwenkbar angeordnete Wenderarme aufweist, wobei jedem Wenderarm eine eigene ansteuerbare Antriebseinheit zugeordnet ist, die unabhängig voneinander ansteuerbar sind und über deren Ansteuerung der jeweilige Wenderarm um die Schwenkachse verschwenkbar ist. Hierdurch können zum Wenden eines plattenförmigen Körpers eine ausreichende Anzahl an Wenderarmen eingesetzt werden, während die übrigen um dieselbe Schwenkachse verschwenkbaren Wenderarme nicht an dem Wenden beteiligt sind. Die ansteuerbaren Antriebseinheiten können elektrisch, hydraulisch oder pneumatisch ausgebildet sein.

Vorteilhafterweise weist das System wenigstens zwei um eine der Schwenkachsen verschwenkbar angeordnete Wenderarme auf, die über wenigstens ein Verbindungselement unbeweglich miteinander verbunden sind, wobei an einer dem zu wendenden, plattenförmigen Körper zugewandten Seite des Verbindungselements wenigstens ein mechanisches Dämpfungselement angeordnet ist. Über das Verbindungselement können zwei oder mehrere Wenderarme zu einer Gruppe zusammengefasst werden. Die Wenderarme können auch über zwei oder mehrere Verbindungselemente unbeweglich miteinander verbunden sein. Mit dem Dämpfungselement kann vermieden werden, dass ein plattenförmiger Körper beispielsweise in Form eines Blechs bei seinem Wenden in Schwingung versetzt wird, was mit einer zu vermeidenden Lärmentwicklung einhergehen würde. Mit dem Dämpfungselement können solche Schwingungen abgedämpft werden. Das Dämpfungselement kann zumindest teilweise aus einem Elastomer gebildet sein. Es können auch zwei oder mehrere Dämpfungselemente entsprechend zum Dämpfen der Schwingungen des plattenförmigen Körpers eingesetzt werden.

Gemäß einer weiteren vorteilhaften Ausgestaltung umfasst das System wenigstens zwei antreibbare Exzenteranordnungen,
- die jeweils eine ortsfest angeordnete Wenderwelle aufweisen, auf denen jeweils wenigstens eine antreibbare Exzenterbuchse über wenigstens ein Radiallager angeordnet ist, wobei jeweils wenigstens ein Wenderarm über wenigstens ein Radiallager mit der jeweiligen antreibbaren Exzenterbuchse verbunden ist, und wobei die Wenderwellen fluchtend zueinander angeordnet sind, oder
- die jeweils eine ortsfest und um ihre Längsmittelachse drehbar angeordnete, antreibbare Wenderwelle aufweisen, auf denen jeweils wenigstens ein drehfest mit der jeweiligen Wenderwelle verbundener Exzenterkörper angeordnet ist, wobei jeweils wenigstens ein Wenderarm über wenigstens ein Radiallager mit dem jeweiligen Exzenterkörper verbunden ist, und wobei die Wenderwellen fluchtend zueinander angeordnet sind.

Hierdurch können auf der Eintragsseite und/oder der Austragsseite des Systems wenigstens zwei unabhängig voneinander antreibbare Exzenteranordnungen angeordnet sein, so dass mit dem System gleichzeitig zwei oder mehrere plattenförmige Körper mit unterschiedlichen Abmessungen, insbesondere unterschiedlichen Dicken, gewendet werden können. Das System kann auch mehrere entsprechende antreibbare Exzenteranordnungen aufweisen.

Nach dem erfindungsgemäßen Verfahren zum Wenden von plattenförmigen Körpern, insbesondere Brammen und Blechen, unter Verwendung eines Wendesystems, das wenigstens einen um eine Schwenkachse verschwenkbar angeordneten Wenderarm, der mit einer Flachseite eines zu wendenden, plattenförmigen Körpers in körperlichen Kontakt bringbar ist, und wenigstens einen um eine weitere Schwenkachse verschwenkbaren weiteren Wenderarm, der mit einer weiteren Flachseite des zu wendenden, plattenförmigen Körpers in körperlichen Kontakt bringbar ist, aufweist, wobei die beiden Schwenkachsen parallel zueinander und beabstandet voneinander angeordnet sind, wird eine Lage von wenigstens einer Schwenkachse vor und/oder während eines Wendevorgangs mittels wenigstens einer Exzenteranordnung verstellt.

Mit dem Verfahren sind die oben mit Bezug auf das System genannten Vorteile entsprechend verbunden. Nach dem erfindungsgemäßen Verfahren können auch die Lagen beider Schwenkachsen mittels jeweils wenigstens einer Exzenteranordnung vor und/oder während eines Wendevorgangs, insbesondere kontinuierlich, verstellt werden.

Gemäß einer vorteilhaften Ausgestaltung wird die jeweilige Dicke des zu wendenden, plattenförmigen Körpers gemessen, wobei die Lage der Schwenkachse vor und/oder während des Wendevorgangs mittels der wenigstens einen Exzenteranordnung in Abhängigkeit der gemessenen Dicke des zu wendenden, plattenförmigen Körpers verstellt wird. Mit dieser Ausgestaltung sind die oben mit Bezug auf die entsprechende Ausgestaltung des Systems genannten Vorteile entsprechend verbunden.

Nach einer weiteren vorteilhaften Ausgestaltung sind wenigstens zwei um eine der Schwenkachsen verschwenkbar angeordnete Wenderarme gemeinsam oder unabhängig voneinander um die Schwenkachse verschwenkbar. Letzteres macht es möglich, dass zum Wenden eines plattenförmigen Körpers eine ausreichende Anzahl an Wenderarmen eingesetzt wird, während die übrigen um dieselbe Schwenkachse verschwenkbaren Wenderarme nicht an dem Wenden beteiligt sind.

Im Folgenden wird die Erfindung unter Bezugnahme auf die anliegenden Figuren anhand von bevorzugten Ausführungsformen beispielhaft erläutert, wobei die nachfolgend dargestellten Merkmale sowohl jeweils für sich genommen als auch in verschiedener Kombination miteinander einen Aspekt der Erfindung darstellen können. Es zeigen:
- Figur 1:: eine schematische Darstellung eines Ausführungsbeispiels für ein erfindungsgemäßes System;
- Figur 2:: eine schematische Darstellung eines weiteren Ausführungsbeispiels für ein erfindungsgemäßes System;
- Figur 3:: eine schematische Darstellung eines weiteren Ausführungsbeispiels für ein erfindungsgemäßes System;
- Figur 4:: eine weitere schematische Darstellung des in Figur 3 gezeigten Systems;
- Figur 5:: eine schematische Darstellung eines Wendevorgangs mittels des in Figur 1 gezeigten Systems; und
- Figur 6:: eine Darstellung eines Ausführungsbeispiels für ein erfindungsgemäßes Verfahren.

In den Figuren sind funktional gleiche Bauteile mit denselben Bezugszeichen versehen.

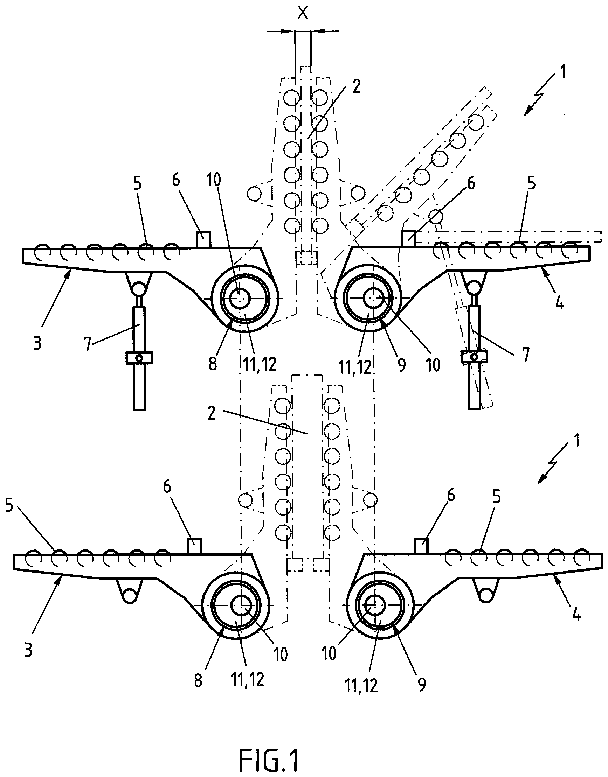

Figur 1 zeigt eine schematische Darstellung eines Ausführungsbeispiels für ein erfindungsgemäßes System 1 beim Wenden von plattenförmigen Körpern 2, insbesondere Brammen und Blechen, unterschiedlicher Dicke. In einem oberen Teil von Figur 1 wird ein plattenförmiger Körper 2 mittels des Systems 1 gewendet, dessen Dicke deutlich geringer als die Dicke des plattenförmigen Körpers 2 ist, der im unteren Teil von Figur 1 mittels des Systems 1 gewendet wird.

Das System 1 umfasst wenigstens einen um eine nicht näher dargestellte Schwenkachse verschwenkbar angeordneten Wenderarm 3 und wenigstens einen um eine nicht näher gezeigte weitere Schwenkachse verschwenkbar angeordneten weiteren Wenderarm 4. Die beiden Schwenkachsen sind senkrecht zur Zeichenebene, parallel zueinander und beabstandet voneinander angeordnet. An jedem Wenderarm 3 bzw. 4 sind eine Mehrzahl an Rollen 5 angeordnet, deren Rollenachsen senkrecht zur Zeichenebene angeordnet sind. Des Weiteren sind an jedem Wenderarm 3 bzw. 4 Nasen 6 zum Abstützen des zu wendenden, plattenförmigen Körpers 2 angeordnet. Jeder Wenderarm 3 bzw. 4 ist über einen ansteuerbaren Aktor 7 um die jeweilige Schwenkachse verschwenkbar, der von unten an den jeweiligen Wenderarm 3 bzw. 4 angreift und gelenkig mit dem jeweiligen Wenderarm 3 bzw. 4 verbunden ist.

Das System 1 umfasst zwei antreibbare Exzenteranordnungen 8 und 9, mit denen jeweils eine Lage einer der Schwenkachsen vor und/oder während eines Wendevorgangs verstellbar ist. Jede antreibbare Exzenteranordnung 8 bzw. 9 kann eine ortsfest angeordnete Wenderwelle 10 und wenigstens eine über wenigstens ein nicht gezeigtes Radiallager auf der Wenderwelle 10 angeordnete, antreibbare Exzenterbuchse 11 aufweisen, wobei einer der Wenderarme 3 bzw. 4 über wenigstens ein nicht gezeigtes Radiallager mit der antreibbaren Exzenterbuchse 11 verbunden ist. Alternativ kann jede antreibbare Exzenteranordnung 3 bzw. 4 eine ortsfest und um ihre Längsmittelachse drehbar angeordnete, antreibbare Wenderwelle 10 und wenigstens einen auf der Wenderwelle 10 angeordneten, drehfest mit der Wenderwelle 10 verbundenen Exzenterkörper 12 aufweisen, wobei einer der Wenderarme 3 bzw. 4 über wenigstens ein nicht gezeigtes Radiallager mit dem Exzenterkörper 12 verbunden ist. Es kann auch eine der antreibbaren Exzenteranordnungen 8 bzw. 9 gemäß der erstgenannten Alternative und die jeweils andere antreibbare Exzenteranordnung 9 bzw. 8 gemäß der zweitgenannten Alternative ausgebildet sein.

Das System 1 kann zudem wenigstens eine nicht gezeigte Messeinheit zum Messen der jeweiligen Dicke des zu wendenden, plattenförmigen Körpers 2 und wenigstens eine kommunikationstechnisch mit der Messeinheit verbindbare, nicht gezeigte Systemelektronik aufweisen, wobei die Systemelektronik eingerichtet ist, die antreibbaren Exzenteranordnungen 8 und 9 in Abhängigkeit der jeweilig gemessenen Dicke des zu wendenden, plattenförmigen Körpers anzutreiben.

An jeder Schwenkachse können auch zwei oder mehrere um die Schwenkachsen verschwenkbar angeordnete Wenderarme 3 bzw. 4 vorhanden sein, wobei jedem Wenderarm 3 bzw. 4 eine eigene ansteuerbare Antriebseinheit bzw. ein eigener ansteuerbarer Aktor 7 zugeordnet ist, die unabhängig voneinander ansteuerbar sind und über deren Ansteuerung der jeweilige Wenderarm 3 bzw. 4 um die jeweilige Schwenkachse verschwenkbar ist.

Im Folgenden wird ein mit dem System 1 durchführbarer Wendevorgang beschrieben. Zunächst werden die Wenderarme 3 und 4 in ihre mit durchgezogenen Linien dargestellten, horizontalen Stellungen verschwenkt. Dann kann auf den Wenderarm 4 der zu wendende, plattenförmige Körper 2 aufgelegt und über die Rollen 5 bewegt werden, bis er in körperlichen Kontakt mit den an dem Wenderarm 4 angeordneten Nasen 6 kommt, wie es in Figur 1 rechts mit gestrichelten Linien gezeigt ist. Dann kann die dem Wenderarm 4 abgewandte Flachseite des plattenförmigen Körpers 2 inspiziert werden. Anschließend kann die Dicke des zu wendenden, plattenförmigen Körpers gemessen werden. Die Systemelektronik treibt daraufhin die antreibbaren Exzenteranordnungen 8 und 9 in Abhängigkeit der jeweilig gemessenen Dicke des zu wendenden, plattenförmigen Körpers 2 an, um die antreibbaren Exzenteranordnungen 8 und 9 in die in dem oberen Teil von Figur 1 gezeigten Stellungen zu bringen. Danach können die Wenderarme 3 und 4 synchronisiert oder unabhängig voneinander verschwenkt werden, wie es durch die in gestrichelten Linien gezeigten mittlere Stellung des Wenderarms 4 angedeutet ist. Das Verschwenken der Wenderarme 3 und 4 erfolgt, bis die Wenderarme 3 und 4 ihre in der Mitte durch gestrichelte Linien gezeigten vertikalen Stellungen erreicht haben, in denen die Übergabe des plattenförmigen Körpers 2 von dem Wenderarm 4 an den Wenderarm 3 erfolgt. Hierbei stützt sich der plattenförmige Körper 2 insbesondere auf den an dem Wenderarm 3 angeordneten Nasen 6 ab. Zuletzt können die Wenderarme 3 und 4 wieder in ihre horizontalen Stellungen verschwenkt werden, so dass der gewendete, plattenförmige Körper auf dem Wenderarm 3 aufliegt und die dem Wenderarm 3 abgewandte Flachseite des plattenförmigen Körpers 2 inspiziert werden kann.

Im unteren Teil von Figur 1 ist ein mit dem System 1 durchführbarer Wendevorgang angedeutet, bei dem ein plattenförmiger Körper 2 gewendet wird, dessen Dicke deutlich größer als die Dicke des im oberen Teil von Figur 1 gezeigten, plattenförmigen Körpers 2 ist. Um eine Lärmentwicklung beim Wenden des plattenförmigen Körpers 2 weitestgehend zu reduzieren, sind die Wenderwellen 11 bzw. die Exzenterbuchsen 12 angetrieben worden, um die antreibbaren Exzenteranordnungen 8 und 9 in die im unteren Teil von Figur 1 gezeigten Stellungen zu bringen.

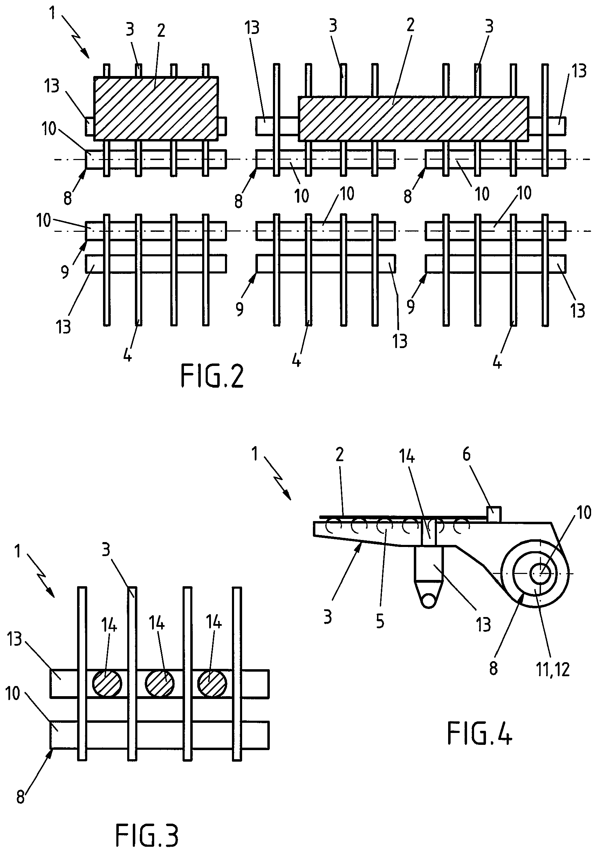

Figur 2 zeigt eine schematische Darstellung eines weiteren Ausführungsbeispiels für ein erfindungsgemäßes System 1. Das System 1 umfasst sechs unabhängig voneinander antreibbare Exzenteranordnungen 8 und 9. Die antreibbaren Exzenteranordnungen 8 und 9 weisen jeweils eine ortsfest angeordnete Wenderwelle 10 auf, auf denen jeweils vier nicht gezeigte antreibbare Exzenterbuchsen über jeweils wenigstens ein nicht gezeigtes Radiallager angeordnet sind. Es sind jeweils vier Wenderarme 3 bzw. 4 über jeweils wenigstens ein nicht gezeigtes Radiallager mit der jeweiligen antreibbaren Exzenterbuchse verbunden. Die Wenderwellen 10 sind fluchtend zueinander angeordnet. Alternativ können die antreibbaren Exzenteranordnungen 8 und 9 jeweils eine ortsfest und um ihre Längsmittelachse drehbar angeordnete, antreibbare Wenderwelle 10 aufweisen, auf denen jeweils vier drehfest mit der jeweiligen Wenderwelle 10 verbundene, nicht gezeigte Exzenterkörper angeordnet sind, wobei jeweils vier Wenderarme 3 bzw. 4 jeweils über wenigstens ein nicht gezeigtes Radiallager mit dem jeweiligen Exzenterkörper verbunden sind, und wobei die Wenderwellen 10 fluchtend zueinander angeordnet sind. Die jeweils vier Wenderarme 3 bzw. 4, die an den einzelnen Wenderwellen 10 gelagert sind, sind jeweils über ein Verbindungselement 13 unbeweglich miteinander verbunden.

Mit den vier rechts dargestellten antreibbaren Exzenteranordnungen 8 und 9 bzw. deren Wenderwellen 10 und Exzenterbuchsen bzw. Exzenterkörpern sowie den an den Wenderwellen 10 gelagerten Wenderarmen 3 und 4 kann ein plattenförmiger Körper 2 gewendet werden. Gleichzeitig kann mit den beiden links dargestellten antreibbaren Exzenteranordnungen 8 und 9 bzw. deren Wenderwellen 10 und Exzenterbuchsen bzw. Exzenterkörpern sowie den an den Wenderwellen 10 gelagerten Wenderarmen 3 und 4 ein plattenförmiger Körper 2 gewendet werden, dessen Abmessungen, insbesondere Dicke, sich von den Abmessungen des rechts gezeigten plattenförmigen Körpers 2 unterscheiden.

Figur 3 zeigt eine schematische Darstellung eines weiteren Ausführungsbeispiels für ein erfindungsgemäßes System 1. Es ist ein Detail des Systems 1 zu sehen, wie es beispielsweise in Figur 2 gezeigt ist. Im Unterschied zu Figur 2 sind an einer dem nicht gezeigten, zu wendenden, plattenförmigen Körper 2 zugewandten Seite des Verbindungselements 13 drei mechanische Dämpfungselement 14 aus einem Elastomer angeordnet.

Figur 4 zeigt eine weitere schematische Darstellung des in Figur 3 gezeigten Systems 1 in Form einer Seitenansicht, wie sie in Figur 1 entsprechend gezeigt ist. Auf die Wenderarme 3 ist ein plattenförmiger Körper 2 aufgelegt. Es ist zu erkennen, dass die mechanischen Dämpfungselemente 14 von dem Verbindungselement 13 bis an die dem Wenderarm 3 zugewandte Flachseite des plattenförmigen Körpers 2 heranragen. Zudem ist zu erkennen, dass die Wenderarme 3 über das Verbindungselement 13 mit einem nicht gezeigten, ansteuerbaren Aktor verbindbar sind, über den die Wenderarme 3 verschwenkbar sind.

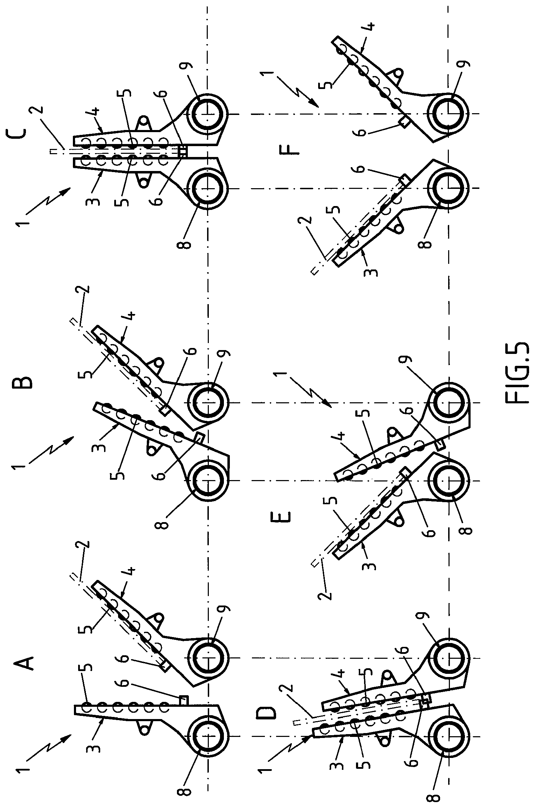

Figur 5 zeigt eine schematische Darstellung eines Wendevorgangs mittels des in Figur 1 gezeigten Systems 1. Zur Vermeidung von Wiederholungen wird zum Aufbau des Systems 1 auf die Ausführungen zu Figur 1 verwiesen. Zum Erreichen der Position A wurde der Wenderarm 3 in seine vertikale Stellung und der Wenderarm 4 gemeinsam mit dem plattenförmigen Körper 2 in Richtung seiner vertikalen Stellung verschwenkt, wobei sich die Exzenteranordnungen 8 und 9 in ihren neutralen Stellungen befinden. Zum Erreichen der Position B wurde der Wenderarm 3 weiter in Richtung des Wenderarms 4 verschwenkt und gleichzeitig die Exzenteranordnungen 8 und 9 wie gezeigt verstellt. Zum Erreichen von Position C wurden die Wenderarme 3 und 4 in ihre vertikalen Stellungen verschwenkt und gleichzeitigt die Exzenteranordnungen 8 und 9 wie gezeigt verstellt. Zum Erreichen der Position D wurden die Wenderarme 3 und 4 im Gegenuhrzeigersinn verschwenkt und gleichzeitig die Exzenteranordnungen 8 und 9 wie gezeigt verstellt. Zum Erreichen von Position E wurden die Wenderarme 3 und 4 weiter im Gegenuhrzeigersinn verschwenkt und gleichzeitig die Exzenteranordnungen 8 und 9 wie gezeigt verstellt. Zum Erreichen von Position F wurden der Wenderarm 3 weiter im Gegenuhrzeigersinn und der Wenderarm 4 im Uhrzeigersinn verschwenkt und gleichzeitig die Exzenteranordnungen 8 und 9 in ihre neutralen Stellungen überführt.

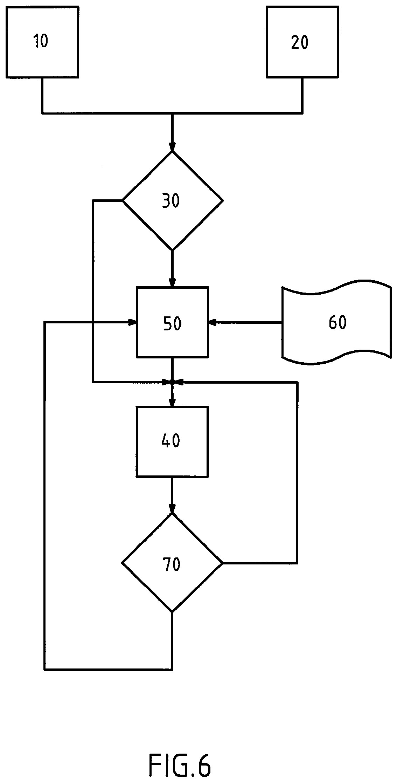

Figur 6 zeigt eine Darstellung eines Ausführungsbeispiels für ein erfindungsgemäßes Verfahren zum Wenden von nicht gezeigten plattenförmigen Körpern, insbesondere Brammen und Blechen, unter Verwendung eines nicht gezeigten Wendesystems, das wenigstens einen um eine Schwenkachse verschwenkbar angeordneten Wenderarm, der mit einer Flachseite eines zu wendenden, plattenförmigen Körpers in körperlichen Kontakt bringbar ist, und wenigstens einen um eine weitere Schwenkachse verschwenkbaren weiteren Wenderarm, der mit einer weiteren Flachseite des zu wendenden, plattenförmigen Körpers in körperlichen Kontakt bringbar ist, aufweist. Die beiden Schwenkachsen sind parallel zueinander und beabstandet voneinander angeordnet. Eine Lage von wenigstens einer Schwenkachse wird vor und/oder während eines Wendevorgangs mittels wenigstens einer Exzenteranordnung verstellt. In Verfahrensschritt 10 wird der jeweilige Ist-Zustand des Wendesystems erfasst. In Verfahrensschritt 20 werden Parameter, wie beispielsweise eine Dicke, Länge oder dergleichen, des jeweilig zu wendenden plattenförmigen Körpers erfasst. In Verfahrensschritt 30 wird ermittelt, ob die Stellung der wenigstens einen Exzenteranordnung zum Wenden des plattenförmigen Körpers geeignet ist oder nicht. Ist die Stellung der wenigstens einen Exzenteranordnung zum Wenden des plattenförmigen Körpers geeignet, wird in Verfahrensschritt 40 der Wendevorgang gestartet. Ist die Stellung der wenigstens einen Exzenteranordnung zum Wenden des plattenförmigen Körpers nicht geeignet, wird die Exzenteranordnung in Verfahrensschritt 50 verstellt, um eine zum Wenden des plattenförmigen Körpers optimale Stellung einzunehmen. Hierzu wird in Verfahrensschritt 50 auf eine Datenmatrix 60 zurückgegriffen, in der Zusammenhänge zwischen Parametern von zu wendenden plattenförmigen Körpern und Stellungen der Exzenteranordnung hinterlegt sind. Während des Wendevorgangs wird in Verfahrensschritt 70 überwacht, ob die Exzenteranordnung für den Wendevorgang optimal eingestellt ist oder nicht. Ist die Exzenteranordnung optimal für den Wendevorgang eingestellt, wird zu Verfahrensschritt 40 übergegangen. Ist die Exzenteranordnung nicht optimal für den Wendevorgang eingestellt, wird zu Verfahrensschritt 50 übergegangen.

### Bezugszeichenliste

- 1: System
- 2: plattenförmiger Körper
- 3: Wenderarm
- 4: Wenderarm
- 5: Rolle
- 6: Nase
- 7: Aktor
- 8: Exzenteranordnung
- 9: Exzenteranordnung
- 10: Wenderwelle
- 11: Exzenterbuchse
- 12: Exzenterkörper
- 13: Verbindungselement
- 14: Dämpfungselement

## Patentansprüche

1. System (1) zum Wenden von plattenförmigen Körpern (2), insbesondere Brammen und Blechen, aufweisend wenigstens einen um eine Schwenkachse verschwenkbar angeordneten Wenderarm (3, 4), der mit einer Flachseite eines zu wendenden, plattenförmigen Körpers (2) in körperlichen Kontakt bringbar ist, und wenigstens einen um eine weitere Schwenkachse verschwenkbar angeordneten weiteren Wenderarm (3, 4), der mit einer weiteren Flachseite des zu wendenden, plattenförmigen Körpers (2) in körperlichen Kontakt bringbar ist, wobei die beiden Schwenkachsen parallel zueinander und beabstandet voneinander angeordnet sind, **gekennzeichnet durch** wenigstens eine antreibbare Exzenteranordnung (8, 9), mit der eine Lage einer der Schwenkachsen vor und/oder während eines Wendevorgangs verstellbar ist.

2. System (1) nach Anspruch 1, **dadurch gekennzeichnet, dass** die antreibbare Exzenteranordnung (8, 9) wenigstens eine ortsfest angeordnete Wenderwelle (10) und wenigstens eine über wenigstens ein Radiallager auf der Wenderwelle (10) angeordnete, antreibbare Exzenterbuchse (11) aufweist, wobei einer der Wenderarme (3, 4) über wenigstens ein Radiallager mit der antreibbaren Exzenterbuchse (11) verbunden ist.

3. System (1) nach Anspruch 1, **dadurch gekennzeichnet, dass** die antreibbare Exzenteranordnung (8, 9) wenigstens eine ortsfest und um ihre Längsmittelachse drehbar angeordnete, antreibbare Wenderwelle (10) und wenigstens einen auf der Wenderwelle (10) angeordneten, drehfest mit der Wenderwelle (10) verbundenen Exzenterkörper (12) aufweist, wobei einer der Wenderarme (3, 4) über wenigstens ein Radiallager mit dem Exzenterkörper (12) verbunden ist.

4. System (1) nach einem der Ansprüche 1 bis 3, **gekennzeichnet durch** wenigstens eine Messeinheit zum Messen der jeweiligen Dicke des zu wendenden, plattenförmigen Körpers (2) und wenigstens eine kommunikationstechnisch mit der Messeinheit verbindbare Systemelektronik, wobei die Systemelektronik eingerichtet ist, die antreibbare Exzenteranordnung (8, 9) in Abhängigkeit der jeweilig gemessenen Dicke des zu wendenden, plattenförmigen Körpers (2) anzutreiben.

5. System (1) nach einem der Ansprüche 1 bis 4, **gekennzeichnet durch** wenigstens zwei um eine der Schwenkachsen verschwenkbar angeordnete Wenderarme (3, 4), wobei jedem Wenderarm (3, 4) eine eigene ansteuerbare Antriebseinheit zugeordnet ist, die unabhängig voneinander ansteuerbar sind und über deren Ansteuerung der jeweilige Wenderarm (3, 4) um die Schwenkachse verschwenkbar ist.

6. System (1) nach einem der Ansprüche 1 bis 5, **gekennzeichnet durch** wenigstens zwei um eine der Schwenkachsen verschwenkbar angeordnete Wenderarme (3, 4), die über wenigstens ein Verbindungselement (13) unbeweglich miteinander verbunden sind, wobei an einer dem zu wendenden, plattenförmigen Körper (2) zugewandten Seite des Verbindungselements (13) wenigstens ein mechanisches Dämpfungselement (14) angeordnet ist.

7. System (1) nach einem der Ansprüche 1 bis 6, **gekennzeichnet durch** wenigstens zwei antreibbare Exzenteranordnungen (8, 9), die jeweils eine ortsfest angeordnete Wenderwelle (10) aufweisen, auf denen jeweils wenigstens eine antreibbare Exzenterbuchse (11) über wenigstens ein Radiallager angeordnet ist, wobei jeweils wenigstens ein Wenderarm (3, 4) über wenigstens ein Radiallager mit der jeweiligen antreibbaren Exzenterbuchse (11) verbunden ist, und wobei die Wenderwellen (10) fluchtend zueinander angeordnet sind, oder
die jeweils eine ortsfest und um ihre Längsmittelachse drehbar angeordnete, antreibbare Wenderwelle (10) aufweisen, auf denen jeweils wenigstens ein drehfest mit der jeweiligen Wenderwelle (10) verbundener Exzenterkörper (12) angeordnet ist, wobei jeweils wenigstens ein Wenderarm (3, 4) über wenigstens ein Radiallager mit dem jeweiligen Exzenterkörper (12) verbunden ist, und wobei die Wenderwellen (10) fluchtend zueinander angeordnet sind.

8. Verfahren zum Wenden von plattenförmigen Körpern (2), insbesondere Brammen und Blechen, unter Verwendung eines Wendesystems, das wenigstens einen um eine Schwenkachse verschwenkbar angeordneten Wenderarm, der mit einer Flachseite eines zu wendenden, plattenförmigen Körpers (2) in körperlichen Kontakt bringbar ist, und wenigstens einen um eine weitere Schwenkachse verschwenkbaren weiteren Wenderarm, der mit einer weiteren Flachseite des zu wendenden, plattenförmigen Körpers (2) in körperlichen Kontakt bringbar ist, aufweist, wobei die beiden Schwenkachsen parallel zueinander und beabstandet voneinander angeordnet sind, **dadurch gekennzeichnet, dass** eine Lage von wenigstens einer Schwenkachse vor und/oder während eines Wendevorgangs mittels wenigstens einer Exzenteranordnung (8, 9) verstellt wird.

9. Verfahren nach Anspruch 7, **dadurch gekennzeichnet, dass** die jeweilige Dicke des zu wendenden, plattenförmigen Körpers (2) gemessen wird, wobei die Lage der Schwenkachse vor und/oder während des Wendevorgangs mittels der wenigstens einen Exzenteranordnung (8, 9) in Abhängigkeit der gemessenen Dicke des zu wendenden, plattenförmigen Körpers (2) verstellt wird.

10. Verfahren nach Anspruch 7 oder 8, **dadurch gekennzeichnet, dass** wenigstens zwei um eine der Schwenkachsen verschwenkbar angeordnete Wenderarme (3, 4) gemeinsam oder unabhängig voneinander um die Schwenkachse verschwenkbar sind.

## Claims

1. System (1) for turning plate-shaped bodies (2), particularly slabs and plates, comprising at least one turning arm (3, 4), which is arranged to be pivotable about a pivot axis and which can be brought into physical contact with a flat side of a plate-shaped body (2) to be turned, and at least one further turning arm (3, 4), which is arranged to be pivotable about a further pivot axis and which can be brought into physical contact with a further flat side of the plate-shaped body (2) to be turned, wherein the two pivot axes are arranged parallel to and at a spacing from one another, **characterised by** at least one drivable eccentric arrangement (8, 9) by which a position of one of the pivot axes is adjustable before and/or during a turning process.

2. System (1) according to claim 1, **characterised in that** the drivable eccentric arrangement (8, 9) comprises at least one turning shaft (10) arranged to be positionally fixed and at least one drivable eccentric bush (11) arranged on the turning shaft (10) by way of at least one radial bearing, wherein one of the turning arms (3, 4) is connected with the drivable eccentric bush (11) by way of at least one radial bearing.

3. System (1) according to claim 1, **characterised in that** the drivable eccentric arrangement (8, 9) comprises at least one drivable turning shaft (10) which is arranged to be positionally fixed and to be rotatable about its longitudinal centre axis and at least one eccentric body (12) which is arranged on the turning shaft (10) and connected with the turning shaft (10) to be secured against rotation relative thereto, wherein one of the turning arms (3, 4) is connected with the eccentric body (12) by way of at least one radial bearing.

4. System (1) according to any one of claims 1 to 3, **characterised by** at least one measuring unit for measuring the respective thickness of the plate-shaped body (2) to be turned and at least one electronic system in communicating connection with the measuring unit, wherein the electronic system is arranged to drive the drivable eccentric arrangement (8, 9) in dependence on the respective measured thickness of the plate-shaped body (2) to be turned.

5. System (1) according to any one of claims 1 to 4, **characterised by** at least two turning arms (3, 4) arranged to be pivotable about one of the pivot axes, wherein associated with each turning arm (3, 4) is an individual controllable drive unit by way of the control of which the respective turning arm (3, 4) is pivotable about the pivot axis, the drive units being controllable independently of one another.

6. System (1) according to any one of claims 1 to 5, **characterised by** at least two turning arms (3, 4) which are arranged to be pivotable about one of the pivot axes and which are non-movably connected together by way of at least one connecting element (13), wherein at least one mechanical damping element (14) is arranged at a side of the connecting element (13) facing the plate-shaped body (2) to be turned.

7. System (1) according to any one of claims 1 to 6, **characterised by** at least two drivable eccentric arrangements (8, 9) each comprising a turning shaft (10) which is arranged to be positionally fixed and on each of which at least one drivable eccentric bush (11) is arranged by way of at least one radial bearing, wherein in each instance at least one turning arm (3, 4) is connected with the respective drivable eccentric bush (11) by way of at least one radial bearing and wherein the turning shafts (10) are arranged to be in alignment with one another, or which each comprise a drivable turning shaft (10) which is arranged to be positionally fixed and to be rotatable about its longitudinal centre axis and on each of which at least one eccentric body (12) connected with the respective turning shaft (10) to be secure against rotation relative thereto is arranged, wherein in each instance at least one turning shaft (3, 4) is connected with the respective eccentric bush (12) by way of at least one radial bearing and wherein the turning shafts (10) are arranged in alignment with one another.

8. Method of turning plate-shaped bodies (2), particularly slabs and plates, with use of a turning system which comprises at least one turning arm, which is arranged to be pivotable about a pivot axis and which can be brought into physical contact with a flat side of a plate-shaped body (2) to be turned, and at least one further turning arm, which is pivotable about a further pivot axis and which can be brought into physical contact with a further flat side of the plate-shaped body (2) to be turned, wherein the two pivot axes are arranged parallel to and at a spacing from one another, **characterised in that** a position of at least one pivot axis is adjusted by means of at least one eccentric arrangement (8, 9) before and/or during a turning process.

9. Method according to claim 7, **characterised in that** the respective thickness of the plate-shaped body (2) to be turned is measured, wherein the position of the pivot axis is adjusted before and/or during the turning process by means of the at least one eccentric arrangement (8, 9) in dependence on the measured thickness of the plate-shaped body (2) to be turned.

10. Method according to claim 7 or 8, **characterised in that** at least two turning arms (3, 4) arranged to be pivotable about one of the pivot axes are pivotable about the pivot axis together or independently of one another.

## Revendications

1. Système (1) pour le retournement de corps en forme de plaques (2), en particulier de brames et de tôles, présentant au moins un bras de retournement (3, 4) disposé en pivotement autour d'un axe de pivotement, qui peut être amené en contact corporel avec un côté plat d'un corps en forme de plaque (2) qui doit faire l'objet d'un retournement, et au moins un bras de retournement supplémentaire (3, 4) disposé en pivotement autour d'un axe de pivotement supplémentaire, qui peut être amené en contact corporel avec un côté plat supplémentaire du corps en forme de plaque (2) qui doit faire l'objet d'un retournement ; dans lequel les deux axes de pivotement sont disposés parallèlement l'un à l'autre et à l'écart l'un de l'autre ; **caractérisé par** au moins un agencement excentrique (8, 9) apte à être actionné, avec lequel une position d'un des axes de pivotement peut être modifiée avant et/ou au cours d'un processus de retournement.

2. Système (1) selon la revendication 1, **caractérisé en ce que** l'agencement excentrique (8, 9) apte à être actionné présente au moins un arbre de retournement (10) disposé à demeure et au moins une bague excentrique (11) qui peut être actionnée, disposée pardessus au moins un palier radial sur l'arbre de retournement (10) ; dans lequel un des bras de retournement (3, 4) est relié via au moins un palier radial à la bague excentrique (11) qui peut être actionnée.

3. Système (1) selon la revendication 1, **caractérisé en ce que** l'agencement excentrique (8, 9) apte à être actionné présente au moins un arbre de retournement (10) disposé à demeure et de manière à pouvoir effectuer des rotations autour de son axe médian longitudinal, et au moins un corps excentrique (12) disposé sur l'arbre de retournement (10), relié en antirotaton avec l'arbre de retournement (10) ; dans lequel un des bras de retournement (3, 4) est relié via au moins un palier radial au corps excentrique (12).

4. Système (1) selon l'une quelconque des revendications 1 à 3, **caractérisé par** au moins une unité de mesure pour la mesure de l'épaisseur respective du corps en forme de plaque (2) qui doit faire l'objet d'un retournement, et au moins une électronique du système qui peut être reliée via une technique de communication à l'unité de mesure ; dans lequel l'électronique du système est conçue pour entraîner l'agencement excentrique (8, 9) qui peut être actionné en fonction de l'épaisseur respectivement mesurée du corps en forme de plaque (2) qui doit faire l'objet d'un retournement.

5. Système (1) selon l'une quelconque des revendications 1 à 4, **caractérisé par** au moins deux bras de retournement (3, 4) disposés en pivotement autour d'un des axes de pivotement ; dans lequel une unité d'entraînement propre qui peut être actionnée est attribuée à chaque bras de retournement, lesdites unités pouvant être excitées indépendamment l'une de l'autre et étant à même de pivoter autour de l'axe de pivotement via leur excitation du bras de retournement respectif (3, 4).

6. Système (1) selon l'une quelconque des revendications 1 à 5, **caractérisé par** au moins deux bras de retournement (3, 4) disposés en pivotement autour d'un des axes de pivotement, qui sont reliés l'un à l'autre en immobilité via au moins un élément de liaison (13) ; dans lequel au moins un élément d'amortissement mécanique (14) est disposé contre un côté de l'élément de liaison (13) tourné vers le corps en forme de plaque (2) qui doit faire l'objet d'un retournement.

7. Système (1) selon l'une quelconque des revendications 1 à 6, **caractérisé par** au moins deux agencements excentriques (8, 9) aptes à être actionnés, qui présentent respectivement un arbre de retournement (10) disposé à demeure, sur lesquels est disposée respectivement au moins une bague excentrique (11) qui peut être actionnée, via au moins un palier radial ; dans lequel respectivement au moins un bras de retournement (3, 4) est relié via au moins un palier radial à la bague excentrique respective (11) qui peut être actionnée; et dans lequel les arbres de retournement (10) sont disposés à fleur l'un par rapport à l'autre ; ou bien qui présentent respectivement un arbre de retournement (10) qui peut être actionné, disposé à demeure et de manière à pouvoir effectuer des rotations autour de son axe médian longitudinal, sur lesquels est disposé respectivement au moins un corps excentrique (12) relié en antirotation à l'arbre de retournement respectif (10) ; dans lequel respectivement au moins un bras de retournement (3, 4) est relié via au moins un palier radial au corps excentrique respectif (12) ; et dans lequel les arbres de retournement (10) sont disposés à fleur l'un par rapport à l'autre.

8. Procédé pour le retournement de corps (2) en forme de plaques, en particulier de brames et de tôles, grâce à l'utilisation d'un système de retournement qui présente au moins un bras de retournement disposé en pivotement autour d'un axe de pivotement, qui peut être amené en contact corporel avec un côté plat d'un corps en forme de plaque (2) qui doit faire l'objet d'un retournement, et au moins un bras de retournement supplémentaire apte à pivoter autour d'un axe de pivotement supplémentaire, qui peut être amené en contact corporel avec un côté plat supplémentaire du corps en forme de plaque (2) qui doit faire l'objet d'un retournement ; dans lequel les deux axes de pivotement sont disposés parallèlement l'un à l'autre et à l'écart l'un de l'autre ; **caractérisé en ce qu'**une position d'au moins un axe de pivotement peut être modifiée avant et/ou au cours d'un processus de retournement au moyen d'au moins un agencement excentrique (8, 9).

9. Procédé selon la revendication 7, **caractérisé en ce qu'**on mesure l'épaisseur respective du corps en forme de plaque (2) qui doit faire l'objet d'un retournement ; dans lequel la position de l'axe de pivotement fait l'objet d'une modification avant et/ou pendant le processus de retournement au moyen dudit au moins un agencement excentrique (8, 9) en fonction de l'épaisseur mesurée du corps en forme de plaque (2) qui doit faire l'objet d'un retournement.

10. Procédé selon la revendication 7 ou 8, **caractérisé en ce qu'**au moins deux bras de retournement (3, 4) disposés en pivotement autour d'un des axes de pivotement sont aptes à pivoter de manière conjointe ou indépendamment l'un de l'autre, autour de l'axe de pivotement.
